# EUROPEAN PATENT SPECIFICATION

(11) **EP 1 766 252 B1**
(45) Date of publication and mention of the grant of the patent: **24.02.2010**
(21) Application number: 05750220.5
(22) Date of filing: 08.06.2005
(51) Int. Cl.: F16D 23/04

(54) **IMPROVEMENTS IN OR RELATING TO ROTARY SYNCHRONISATION ARRAGEMENTS**
VERBESSERUNG VON DREHSYNCHRONISATIONSANORDNUNGEN ODER DIESE BETREFFEND
AGENCEMENTS DE SYNCHRONISATION ROTATIFS AMELIORES

(30) Priority: 08.06.2004 GB 0412738
(43) Date of publication of application: 28.03.2007
(73) Proprietor: RICARDO UK LIMITED, Shoreham-by-Sea, West Sussex BN43 5FG (GB)
(72) Inventor: TURNER, William Stanley, Wrexham LL14 5DD (GB)
(74) Representative: Chettle, Adrian John
(86) International application number: PCT/GB2005/002270
(87) International publication number: WO 2005/121586

(56) References cited:
- GB-A- 231 762
- GB-A- 489 723
- US-A- 5 377 800

## Description

The present invention relates to an improved arrangement for the coupling of two relatively rotatable components, which require to be coupled in use with controlled synchronisation of speed. In particular, though not exclusively, the present invention relates to the coupling of rotatable components of an automotive transmission system, of the kind commonly referred to as synchromesh. The present invention is particularly suited to the coupling of rotatable components which are subject to residual torque.

Residual torque in transmission systems will be understood by those skilled in art as providing difficulty in the design of synchromesh systems. Residual torque in a transmission system may exist as a result of a number of factors including high inertia in shafts and gears, bearing drag, drag due to high lubricant viscosity, high rotational speeds of shafts and/or gears, and large shaft and gear diameters. In the automotive transmission field there is a continued requirement for improvements in the quality of gear ratio changes and in the speed of operation of gear shift devices. Current trends in automotive transmission system design require high quality gear ratio changes to be achieved despite high residual torque and with little or no closed loop control in the shift device. It is also an increasing requirement for the gear shift device of the transmission system to be operated automatically without direct manual input from the driver of a vehicle. Such transmission systems are commonly referred to as automated manual transmission systems.

US 5377800 illustrates a transmission system having a conventional synchromesh arrangement which has been adapted to include a hydraulic actuator. The hydraulic actuator is arranged to activate a clutch sleeve of the transmission system. The system described in US 5377800 may potentially suffer from gear selection problems, such as blocked or missed gear shifts, in instances where the synchromesh arrangement is unable to synchronise the rotational speeds of two components between which the synchromesh arrangement is provided. Such instances are most likely to occur where high residual torque is experienced by one or both of the components. GB-A-231762 and GB-A-489723 disclose synchroniser arrangements having the features of the pre-characterizing portion of claim 1 appended hereto.

According to the invention there is provided a synchronisation arrangement comprising first and second drive members relatively rotatably about a common drive axis and having respective first and second engagement members relatively movable along said axis between engaged and disengaged conditions, said first drive member and first engagement member being rotationally fast in the disengaged condition, and said second drive member and second engagement member being rotationally fast in both the engaged and disengaged conditions, wherein said first and second engagement members have mutually engageable clutch faces, and said second engagement member has a plurality of drive teeth engageable with corresponding drive teeth of said first drive member in the engaged condition, whereby in use relative movement of said first and second engagement members has an intermediate condition in which said clutch faces are in driving engagement, said first drive member and first engagement member are disengaged, and said second engagement member and first drive member are disengaged, **characterized in that** in said engaged condition said first drive member and first engagement member are disengaged to obviate torque transmission therebetween.

In one embodiment the synchronisation arrangement comprises a driven input member and a driveable output member rotatable about a common axis, the input member being provided with a plurality of drive teeth and an axially movable clutch member, and the output member being provided with an axially movable piston having a plurality of drive teeth arranged to mate with the drive teeth of the input member, wherein the piston is rotationally fixed to the output member at all axial positions of the piston relative to the output member, and the clutch member is movable between an axial position relative to the input member where the clutch member is rotationally fixed to the input member and an axial position relative to the input member where the clutch member is rotatable relative to the input member, wherein the piston is movable between an initial axial position where the piston is spaced from the clutch member and the clutch member is rotationally fixed to the input member, an intermediate position where the piston is in contact with the clutch member and the clutch member is in an axial position where the clutch member is rotatable relative to the input member, and a final position where the drive teeth of the piston mate with the drive teeth of the input member.

The clutch permits torque to be progressively transmitted from the one drive member to the other drive member before direct drive is assured in the fully engaged condition. A degree of relative rotation is permitted prior to the fully engaged condition by the clutch. This rotation allows the usual drive teeth to align correctly prior to subsequent mating.

Where one of the engagement members is a piston, relative axial movement may be effected hydraulically. In such an embodiment a hydraulic ram arrangement may be provided between the piston and drive member. The ram arrangement may comprise a projection of one of the piston and drive member and a complementary recess of the other of the piston and drive member. The projection and recess may each be annular.

One engagement member is preferably provided with a tapered engagement face which, in use engages a complementarily tapered seat of the other engagement member. The seat is preferably provided with a layer of friction material to constitute the clutch.

The engagement members may be rotationally fixed to the respective drive members by the interengagement of axially aligned formations. The formations are preferably defined by complementarily arranged splines.

There is preferably provided a spring return mechanism arranged to disengage the drive teeth and return the components to the disengaged condition. The spring mechanism is preferably provided between components on the drive input side such that axial movement towards the engaged condition causes deflection of a resilient member. Preferably the resilient member is compressed in the engaged condition. The return mechanism may include a plurality of resilient members, such as a stack of belleville washers, arranged back to back.

An additional light resilient member is preferably provided between the engagement members to ensure separation in the disengaged condition. This light resilient member may for example be a single belleville washer acting between the engagement (clutch) members.

In use the drive members are in relatively fixed positions in a transmission, and the engagement members are both movable relative to the drive members into the engaged condition whereby a dog drive is provided from one driven member to the other via one of the engagement members only.

An embodiment of the present invention will now be described with reference to the accompanying drawings in which:
Figure 1 shows a partial cross-sectional view of opposed rotatable members of a transmission arrangement having a synchromesh arrangement according to the present invention, and in the disengaged condition;
Figure 2 shows initial movement of the synchromesh arrangement of figure 1 with clutch faces in engagement;
Figure 3 shows the synchromesh arrangement of figure 1 approaching the fully engaged condition; and
Figure 4 shows the synchromesh arrangement of figure 1 in a fully engaged condition, with the opposed rotatable members in engagement with one another.

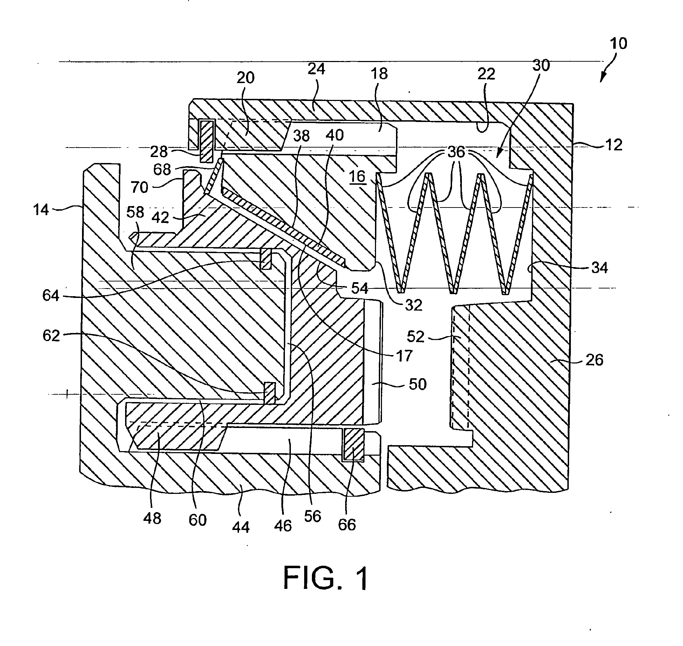

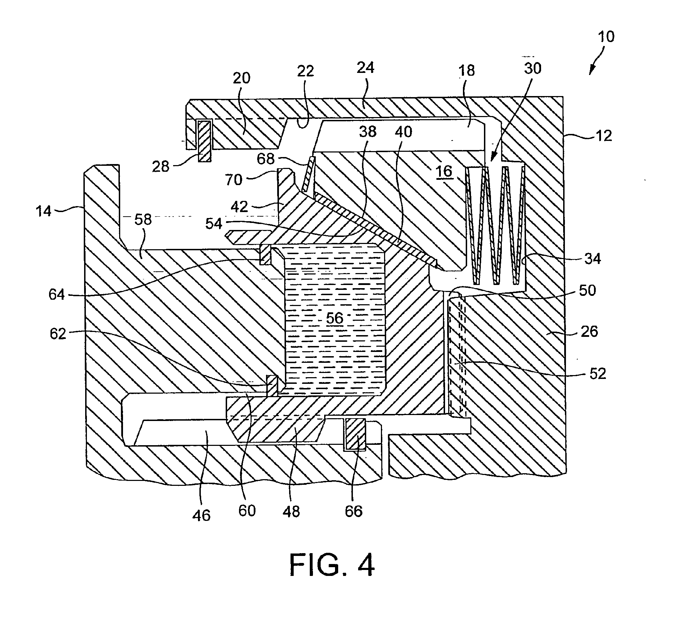

Referring firstly to figure 1 there is shown a transmission arrangement generally designated 10. The arrangement includes a driven input member 12 and a driveable output member 14. Both the input and output members 12,14 are in the form of substantially circular hubs which face one another along a common axis of rotation. The input member 12 is connected to a drive means (not shown) The input member 12 is provided with an annular clutch member 16 having a drive face 17. In figure 1 the clutch member 16 is shown to be fixed rotationally with respect to the input member 12, but is able to move axially with respect to the input member 12. This interaction between the input and clutch members 12,16 is permitted by the presence of a sliding connection between the members 12,16. The outer edge of the clutch member 16 is provided with a plurality of splines 18 which interengage with complementary splines 20 of the input member 12. The splines 20 of input member are provided on the inner face 22 of a peripheral wall 24 of the input member 12. As will be described in greater detail below the clutch member 16 may be moved axially with respect to the input member 12 such that the splines 18, 20 disengage with the result that the clutch member 16 is no longer fixed rotationally with respect to the input member 12 (Fig. 4).

The peripheral wall 24 extends forward of the main body 26 of the input member 12 in the direction of the output member 14. As can be seen from figure 1 the will 24 surrounds the foremost portion of the output member 14. A stop 28 (e.g. a circlip) is provided on the wall 24 to limit the axial movement of the clutch member 16 in the direction of the output member 14, and to retain the clutch member 16 within the wall 24. The clutch member 16 is urged in the direction of the output member 14 by a spring pack 30 provided between a rear face 32 of the clutch member 16 and an annular seat 34 of the input member 12. The spring pack 30 comprises a plurality of belleville washer springs 36 arranged back to back. The clutch member 16 is provided with a substantially conical engagement face 38 which carries a layer of friction material 40.

The output member 14 is provided with an annular piston 42 having a drive face 54 for engagement with the drive face 17. The piston 42 is rotationally fixed with respect to the output member 14 but is axially movable with respect to the output member 14. This interaction between the output member 14 and piston 42 is permitted by the presence of a sliding connection therebetween. A central projection 44 of the output member 14 is provided with a plurality of splines 46 which interengage with complementary splines 48 of the piston 42. However, unlike the input and clutch members 12,16 the piston 42 remains rotationally fixed to the output member 14 at all axial positions of the piston 42 relative to the output member 14. The piston 42 is provided at a forward edge with a plurality of radially extending dog teeth 50. The dog teeth 50 face complementary dog teeth 52 of the input member 12. The piston 42 includes a conical engagement face 54 which opposes the friction material 40 of the clutch member 16.

Between the output member 14 and piston 42 there is provided an annular chamber 56. The chamber 56 is defined between an annular projection 58 of the output member 14 and a complementary annular recess 60 of the piston 42. The projection 58 is provided with inner and outer seals 62,64. The chamber 56 is in fluid communication with a source of hydraulic fluid via appropriate inlet and outlet ports (not shown) provided in the output member 14. It will thus be understood that axial movement of the piston 42 relative to the output member 14 in the direction of the input member 12 may be effected by the introduction of pressurised hydraulic fluid into the chamber 56.

The output member 14 is further provided in the region of the splines 46 with a limit stop 66 in the form of ring or circlip to limit the axial movement of the piston 42 in the direction of the input member. A further light belleville washer spring 68 is provided between the clutch member 16 and a flange 70 of the piston 42. The spring 68 urges the clutch member 16 and piston 42 apart during periods when the chamber 56 is empty of hydraulic fluid, but allows substantially friction free relative rotation (Fig. 1). The spring 68 has a much lower return force than the spring pack 30.

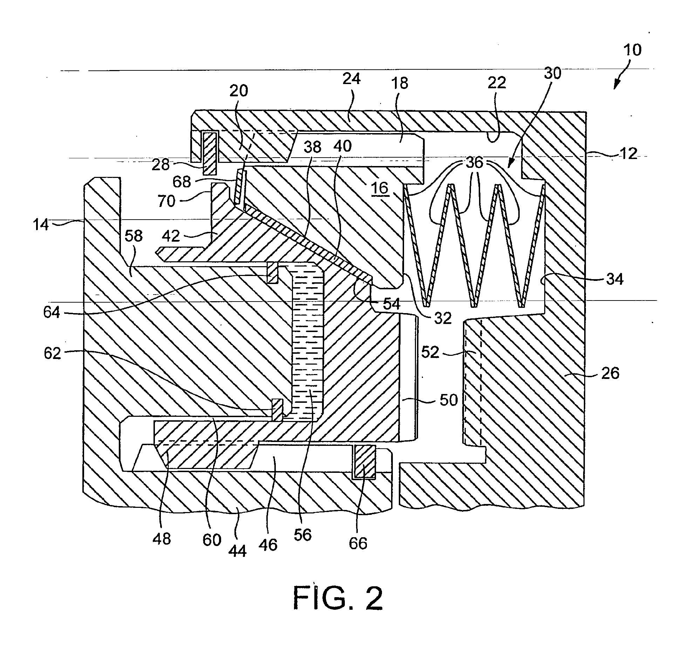

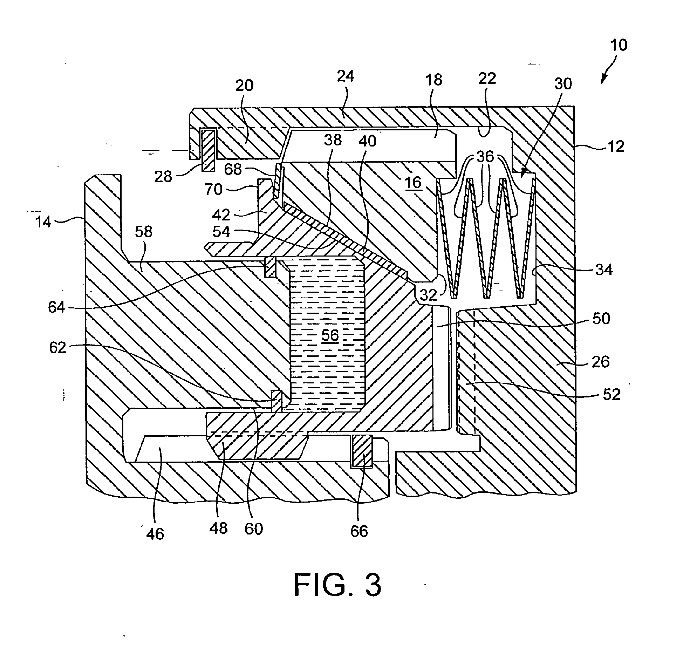

Operation of the transmission arrangement 10 will now be described. Figure 1 shows the arrangement 10 in a disengaged condition where the input member 12 is not connected to the output member 14 and hence torque cannot be transmitted between the members 12,14. It will be appreciated that rotation of the input member 12 will result in rotation of the clutch member 16 by virtue of the splined connection 18,20 therebetween. In order to connect the input member 12 to the output member 14 via their respective dog teeth 50,52, the speed of rotation of both members 12,14 must be synchronised. Figure 2 shows an initial step in the synchronisation process. Hydraulic fluid is fed to the chamber 56 provided between the piston 42 an the output member 14 causing the piston 42 to move towards the input member 12. This movement of the piston 42 causes the light spring 68 positioned between the piston 42 and clutch member 16 to compress and the conical engagement face 54 of piston to come into contact with the friction material 40 of the clutch member 16. Synchronisation of speed of the members 16,42 thus commences. The continued supply of hydraulic fluid to the chamber 56 urges the piston 42 towards the input member 12 as can be seen in figure 3. The movement of the piston 42 causes the spring pack 30 to be compressed and the dog teeth 50 of the piston 42 to approach the dog teeth 52 of the input member 12.

The piston 42 is eventually extended relative to the output member 14 so that the dog teeth 50,52 engage one another (figure 4). In this position the input and output members 12,14 are rotationally fixed to one another and thus the input member 12 is able to drive the output member 14 via the piston 42. It will be noted that the when the dog teeth 50,52 are engaged with one another, the splines 20 of the input member 12 are no longer engaged with the splines 18 of the clutch member 16. Disengagement of the splines 18,20, and hence the disengagement of torque transmission from the input member 12 to the output member 14 through the clutch member 16 and piston 42, occurs at an extension distance of the piston 42 from the output member 14 which is slightly before the extension distance corresponding to engagement of the dog teeth 50,52. Disengagement of the splines 18,20 permits relative rotational movement to be permitted between the input member 12 and output members/piston combination 14,42 prior to the engagement of the dog teeth 50,52. This rotational movement permits alignment of the dog teeth 50,52 so that the connection of the piston 42 to the input member 14 is not blocked or baulked by crown to crown alignment of the dog teeth 50,52.

The degree by which the input member 12 and output members/piston combination 14,42 may rotate relative to one another may depend upon a number of factors including, but not limited to, the relative lengths of the splines 18,20, the stroke of the piston 42, the length of the portion of the stroke of the piston between spline 18,20 disengagement and engagement of the dog teeth 50,52, the axial speed of the piston 42, and the shape and number of the dog teeth 50,52.

It will be appreciated that engagement of the dog teeth 50,52 prevents relative rotation of the clutch components 16,42.

In order to disengage the dog teeth 50,52, the supply of hydraulic fluid to the chamber 56 is vented. The compressed spring pack 30 urges the clutch member 16 and the piston 42 in the direction of the output member 14 thereby causing the fluid to flow out of the chamber 56. As the clutch member 16 and piston 42 move towards the output member 14, the dog teeth 50,52 disengage and the splines 18,20 of the input and clutch members 12,16 re-engage. The clutch member 16 and piston 42 eventually revert to the positions shown in figure 1 in which the residual load of the light return spring 68 is minimal.

The synchronisation arrangement of the present invention may be utilised in a number of different applications. For example, the arrangement may be utilised in an automotive transmission. Particularly, the arrangement may be utilised in the transfer gearbox of an automotive transmission where more that one axle of the vehicle is driven. The arrangement may be incorporated in a range-change device, a two or more wheel selection device or a ratio change device.

The synchronisation arrangement of the present invention may also be incorporated in to the transmission systems of vehicles which operate under arduous and severe conditions such as, for example, heavy earth moving equipment, agricultural vehicles such as tractors. The arrangement may also be employed in marine transmission applications such as, for example, outboard engine forward and reverse drive selection devices.

Although the invention has been described in relation to hydraulic operation, it will be understood that other means of moving the engagement members are possible, including pneumatic, electric or mechanical devices.

## Claims

1. A synchronisation arrangement comprising first and second drive members (12,14) relatively rotatably about a common drive axis and having respective first and second engagement members (16,42) relatively movable along said axis between engaged and disengaged conditions, said first drive member (12) and first engagement member (16) being rotationally fast in the disengaged condition, and said second drive member (14) and second engagement member (42) being rotationally fast in both the engaged and disengaged conditions, wherein said first and second engagement members (16,42) have mutually engageable clutch faces (17,54), and said second engagement member (42) has a plurality of drive teeth (50) engageable with corresponding drive teeth (52) of said first drive member (12) in the engaged condition, whereby in use relative movement of said first and second engagement members (16,42) has an intermediate condition in which said clutch faces (17,54) are in driving engagement, said first drive member (12) and first engagement member (16) are disengaged, and said second engagement member (42) and first drive member (12) are disengaged, **characterized in that** in said engaged condition said first drive member (12) and first engagement member (16) are disengaged to obviate torque transmission therebetween.

2. An arrangement as claimed in claim 1, one of said engagement members (16,42) comprises a hydraulic ram.

3. An arrangement as claimed in claim 2, wherein said ram is associated with a driven member, in use.

4. An arrangement as claimed in claim 2 or claim 3, wherein said ram comprises a projection (44) of one of said drive members (14), and a complementary recess (60) of a piston constituted by the respective engagement member (42).

5. An arrangement as claimed in claim 4, wherein the projection (44) and recess (60) arc annular.

6. An arrangement as claimed in any preceding claim, wherein said engagement (16,42) members are provided with respective tapered frusto-conical engagement faces (17,54).

7. An arrangement as claimed in claim 6, wherein one of said engagement faces (17) is provided with a layer of friction material (40).

8. An arrangement as claimed in any preceding claim, wherein the engagement (16,42) members and respective drive members are connected in the disengaged condition by axially aligned formations (18,20;46,48).

9. An arrangement as claimed in claim 8, wherein the formations comprise complementarily splines.

10. An arrangement as claimed in any preceding claim and provided with light return mechanism (68) arranged to urge the engagement members (16,42) to the disengaged condition.

11. An arrangement as claimed in claim 10, wherein the light return mechanism includes a resilient member.

12. An arrangement as claimed in claim 11, wherein a resilient return mechanism (30) is provided between said first drive member (12) and first engagement member (16).

13. An arrangement as claimed in claim 12, wherein the resilient return mechanism (30) includes a plurality of resilient members.

14. An arrangement according to claim 13, wherein the resilient return mechanism comprises a stack of belleville washers arranged back to back.

## Patentansprüche

1. Synchronisationsanordnung umfassend erste und zweite Antriebselemente (12, 14), die jeweils um eine gemeinsame Antriebsachse drehbar sind und zugehörige erste und zweite Einrückelemente (16, 42) aufweisen, die entlang der Achse zwischen einem Einrückzustand und einem Ausrückzustand relativ beweglich sind, wobei das erste Antriebselement (12) und das erste Einrückelement (16) im Ausrückzustand drehfest sind, und das zweite Antriebselement (14) und das zweite Einrückelement (42) sowohl im Einrück- wie im Ausrückzustand drehfest sind, wobei das erste und das zweite Einrückelement (16, 42) Kupplungsflächen (17, 54) aufweisen, die aneinander eingreifen können, und das zweite Einrückelement (42) eine Mehrzahl von Mitnehmerzähnen (50) aufweist, die im Einrückzustand in zugehörige Mitnehmerzähne (52) des ersten Antriebselements (12) eingreifen können, wodurch im Einsatz eine relative Bewegung des ersten und zweiten Einrückelements (16, 42) einen Zwischenzustand aufweist, in dem die Kupplungsflächen (17, 54) in Antriebseingriff sind, wobei das erste Antriebselement (12) und das erste Einrückelement (16) ausgerückt sind und das zweite Einrückelement (42) und das erste Antriebselement (12) ausgerückt sind, **dadurch gekennzeichnet, dass** im Einrückzustand das erste Antriebselement (12) und das erste Einrückelement (16) ausgerückt sind, um eine Momentübertragung zwischen ihnen zu vermeiden.

2. Anordnung nach Anspruch 1, wobei eines der Einrückelemente (16, 42) einen Hydraulikkolben umfasst.

3. Anordnung nach Anspruch 2, wobei der Kolben im Einsatz einem angetriebenen Element zugeordnet ist.

4. Anordnung nach Anspruch 2 oder 3, wobei der Kolben einen Vorsprung (44) von einem der Antriebselemente (14) und eine komplementäre Ausnehmung (60) von einem Kolben, der durch das zugehörige Einrückelement (42) gebildet ist, umfasst.

5. Anordnung nach Anspruch 4, wobei der Vorsprung (44) und die Ausnehmung (60) ringförmig sind.

6. Anordnung nach einem der vorhergehenden Ansprüche, wobei die Einrückelemente (16, 42) mit zugehörigen kegelstumpfförmig verjüngten Eingriffsflächen (17, 54) versehen sind.

7. Anordnung nach Anspruch 6, wobei eine der Eingriffsflächen (17) mit einer Schicht aus Reibmaterial (40) versehen ist.

8. Anordnung nach einem der vorhergehenden Ansprüche, wobei die Einrückelemente (16, 42) und zugehörige Antriebselemente im Ausrückzustand durch axial ausgerichtete Formationen (18, 20; 46, 48) verbunden sind.

9. Anordnung nach Anspruch 8, wobei die Formationen komplementäre Verzahnungen umfassen.

10. Anordnung nach einem der vorhergehenden Ansprüche und versehen mit einem leichten Rückholmechanismus (68), der dazu ausgebildet ist, die Einrückelemente (16, 42) in den Ausrückzustand zu treiben.

11. Anordnung nach Anspruch 10, wobei der leichte Rückholmechanismus ein federndes Element umfasst.

12. Anordnung nach Anspruch 11, wobei ein federnder Rückholechanismus (30) zwischen dem ersten Antriebselement (12) und dem ersten Einrückelement (16) vorgesehen ist.

13. Anordnung nach Anspruch 12, wobei der federnde Rückholmechanismus (30) eine Mehrzahl von federnden Elementen umfasst.

14. Anordnung nach Anspruch 13, wobei der federnde Rückholmechanismus einen Stapel Tellerfedern umfasst, die aufeinanderfolgend angeordnet sind.

## Revendications

1. Dispositif de synchronisation comprenant un premier et un second éléments d'entraînement (12, 14) tournant l'un par rapport à l'autre autour d'un axe d'entraînement commun et comportant chacun un premier et un second éléments d'engagement respectifs (16, 42) déplaçables l'un par rapport à l'autre le long dudit axe entre un état engagé et un état désengagé, ledit premier élément d'entraînement (12) et ledit premier élément d'engagement (16) tournant vite à l'état désengagé, et ledit second élément d'entraînement (14) et ledit second élément d'engagement (42) tournant vite à la fois à l'état désengagé et à l'état engagé, dans lequel lesdits premier et second éléments d'engagement (16, 42) présentent des faces d'embrayage (17, 54) pouvant être mutuellement engagées, et dans lequel ledit second élément d'engagement (42) présente une pluralité de dents d'engrenage (50) pouvant s'engrener dans des dents d'engrenage correspondantes (52) dudit premier élément d'entraînement (12) à l'état engagé, par lequel, en utilisation, le déplacement relatif desdits premier et second éléments d'engagement (16, 42) présente un état intermédiaire dans lequel lesdites faces d'embrayage (17, 54) sont engagées en entraînement, ledit premier élément d'entraînement (12) et ledit premier élément d'engagement (16) son désengagées, ledit second élément d'engagement (42) et ledit premier élément d'entraînement (12) sont désengagés, **caractérisé en ce que** dans ledit état engagé le premier élément d'entraînement (12) et le premier élément d'engagement (16) sont désengagés pour éviter toute transmission de couple entre eux.

2. Dispositif selon la revendication 1, **caractérisé en ce qu'**un des éléments d'engagement (16, 42) comprend un vérin hydraulique.

3. Dispositif selon la revendication 2, **caractérisé en ce que**, en utilisation, le vérin est associé à un élément d'entraînement.

4. Dispositif selon la revendication 2 ou la revendication 3, **caractérisé en ce que** le vérin comporte une saillie (44) d'un des éléments d'entraînement (14) et un évidement complémentaire (60) d'un piston constitué par l'élément d'engagement (42) respectif.

5. Dispositif selon la revendication 4, **caractérisé en ce que** la saillie (44) et l'évidement (60) sont annulaires.

6. Dispositif selon l'une quelconque des revendications précédentes, **caractérisé en ce que** les éléments d'engagement (16, 42) sont pourvus de faces d'engagement (17, 54) respectives tronconiques.

7. Dispositif selon la revendication 6, **caractérisé en ce qu'**une des faces d'engagement (17) est revêtue d'une couche de matériau de frottement (40).

8. Dispositif selon l'une quelconque des revendications précédentes, **caractérisé en ce que** les éléments d'engagement (16, 42) et les éléments d'entraînement respectifs sont connectés à l'état désengagé par des conformations (18, 20 ; 46, 48) alignées de manière axiale.

9. Dispositif selon la revendication 8, **caractérisé en ce que** les conformations comportent des cannelures complémentaires.

10. Dispositif selon l'une quelconque des revendications précédentes, **caractérisé en ce qu'**il comprend un mécanisme de renvoi à faible force de rappel (68) prévu pour forcer les éléments d'engagement (16, 42) dans l'état désengagé.

11. Dispositif selon la revendication 10, **caractérisé en ce que** le mécanisme de renvoi à faible force de rappel comprend un élastique.

12. Dispositif selon la revendication 11, **caractérisé en ce qu'**un mécanisme de renvoi élastique (30) est prévu entre le premier élément d'entraînement (12) et le premier élément d'engagement (16).

13. Dispositif selon la revendication 12, **caractérisé en ce que** le mécanisme de renvoi élastique (30) comporte une pluralité d'éléments élastiques.

14. Dispositif selon la revendication 13, **caractérisé en ce que** le mécanisme de renvoi élastique comprend un empilement de rondelles Belleville disposées dos-à-dos.
